# EUROPEAN PATENT SPECIFICATION

(11) **EP 3 972 702 B1**
(45) Date of publication and mention of the grant of the patent: **27.08.2025**
(21) Application number: 20809102.5
(22) Date of filing: 24.04.2020
(51) Int. Cl.: A62C 35/68, A62C 31/28, A62C 37/08, B05B 15/65, F16L 3/12

(54) **UPPER CLAMP LOCK OF SPRINKLER BRACKET**
OBERES KLEMMSCHLOSS EINER SPRINKLERHALTERUNG
VERROU DE SERRAGE SUPÉRIEUR DE SUPPORT D'ARROSEUR

(30) Priority: 21.05.2019 TR 201907671
(43) Date of publication of application: 30.03.2022
(73) Proprietor: Haci Ayvaz Endüstriyel Mamüller Sanayi ve Ticaret Anonim Sirketi, Beyoglu/Istanbul (TR)
(72) Inventor: AYVAZ, Ohannes, Istanbul (TR)
(74) Representative: Yamankaradeniz, Kemal
(86) International application number: PCT/TR2020/050349
(87) International publication number: WO 2020/236108

(56) References cited:
- EP-A1- 2 380 635
- WO-A1-2015/184157
- CN-A- 107 362 486
- CN-A- 107 362 486
- JP-A- H10 263 106
- KR-B1- 101 335 984

## Description

### Technical Field

The invention is a sprinkler bracket according to independent claim 1.

The invention particularly relates to a sprinkler bracket with an upper clamp lock developed for the purpose of providing full locking after the assembly comprising of the bottom clamp and the upper clamp are locked to each other.

### State of the Art

Today sprinkler systems are used to detect the fire indoor and outdoor areas and then provides fire extinguishing by spraying water. These systems are positioned on a suspended ceiling and formed by hanging the sprinkler part from the ceiling. In case of a fire, the system is activated and pumps water to the sprinklers and the water compressed to the system established with pipes advances to towards the sprinkler. In this manner, the sprinkler sprays the water within the environment and extinguishes the fire.

In the prior art, in case the sprinkler is required to be demounted, it shall be removed from the top. Since the sprinkler configuration is assembled on the narrow ceiling structures, the assembly and disassembly of the sprinkler takes much time and requires additional labor.

In the present state of the art, the sprinkler sleeve which fixes the sprinkler head is fixed to the profile. For this fixation process, the sleeve is inserted from the top portion to the profile. This process not only increase the labor processes but also extends the duration of the assembly and prevents the assembly to be realized in an efficient manner.

In the state of the art, since the handle which holds the lower and the upper clamp together is free at the pivot point, it is influenced by the environmental factors and thus it is loosened. The surfaces where the upper and the lower clamps contact to the sprinkler sleeve are not sufficient to retain the sleeve in a stable manner. This leads to slipping of the sleeve from the slot during water spraying and prevents performing an efficient spraying.

In the patent research made regarding the prior art, file No US20160279455A1 is encountered. In this application, the sprinkler sleeve is fixed to the profile with an integral apparatus. Therefore, this application can be referred as an example to the problems arises out of the insertion of the sleeve from the top.

As a result of the researches made in the literature, various structures are encountered regarding the sprinkler system. One of them is the utility model with application No TR2007/05025. In the summary of the invention with classification category A62C 37/08, it is stated that; "Our invention is related to a sprinkler hose system used in the indoor fire extinguishing installations having the duty of extinguishing the possible fires that may happen indoor areas, characterized by comprising; the metal end of the flexible hose which is connected to the main pipe via a main pipe connection end is fixed to the movable sliding part. The metal end and the sprinkling end is fully fitted in the hole opened in the ceiling by means of positioning the movable sliding part on the hole opened in the ceiling by means of moving on the motion axis plate and thus hole openings are eliminated on the ceiling. Also, in these systems, since the movable sliding part uses motion axis plate and flexible hose, it is provided that during building quake or earthquake, the fire extinguishing system is left switched on and it absorbs the vibration created. The system consists of; main pipe, main pipe connection end, flexible hose, metal end, movable sliding part, motion axis plate, plate fixation part, ceiling fastening part and sprinkling end".

Another example regarding the structure is the patent with application No TR2018/13638. In the summary of the invention with classification category F16L 11/12, it is mentioned that "A sprinkler assembly has a sleeve which covers at least one section of a channel which connects the sprinkler to a section line of a fire suppression system. The sleeve can have a color area, color patterns with contrast, symbols, distinctive signs or combination of these elements and can be used to show the features of the sprinkler assembly in a visible manner."

In another example of the structure is the utility model with application No TR2018/09018. In the summary of the invention with classification category A62C 35/00, the following statement takes place "The invention is related to a fire extinguishing sprinkler badge which is used in house, office, store, shopping center, school, hospital, car parking area, warehouse, factory and similar indoor places by means of being positioned on the ceiling or the wall and is used for closing and adjusting the gaps on the ceiling and walls during the sprinkler assembly which performs the functions of fire extinguishing and controlling the fire, is appropriate to all types of sprinklers, is heat resistant and durable."

Another document regarding the invention is EP2380635A1. Said invention relates to a sprinkler mounting device that includes an open-type mounting bracket, to which a reducer is fit and firmly joined from the front. However, the present technique cannot provide a strong structure for sprinkler and reducer.

The sprinkler sleeve is fixed to the profile with an integral apparatus in the above-mentioned applications. Therefore, these applications can be referred as an example to some disadvantages mentioned above.

As a result, parallel to the developing technology in sprinkler bracket, developments are made, therefore new configurations are required in order to eliminate above-mentioned disadvantages and bring solutions to current systems.

### Aim of the Invention

The invention is related to the sprinkler bracket which is different from the structures used in the state of the art, is developed to solve the disadvantages and brings some additional advantages.

The aim of the invention is to keep the lower clamp fixed with the upper clamp by means of the handle while the device is in closed position.

Another aim of the invention is to increase the surface area where the clamp and the sleeve contacts by adding concave holder nails to the sleeve gaps in the lower and upper clamps. Therefore, the sprinkler sleeve is provided to be kept stable by increasing the surface friction.

It will be understood more clearly by the detailed description written with reference to the drawings. For this reason, the evaluation shall be made by taking these figures and the detailed description into consideration.

### Brief Description of the Figures Clarifying the invention

Figure - 1 is a perspective view of the inventive sprinkler bracket in a condition where the clamps are opened.
Figure - 2 is a perspective view of the inventive sprinkler bracket in a condition before the profile and sleeve are connected.
Figure - 3 is a perspective view of the inventive sprinkler bracket where it is in a closed position alone.

### Reference Numbers

- **1.**: Sprinkler bracket
- **10.**: Lower clamp
- **11.**: Profile housing
- **12.**: Handle lock border abutment
- **20.**: Upper clamp
- **21.**: Locking bar housing
- **22.**: Handle lock
- **30.**: Locking bar
- **31.**: Handle
- **32.**: Bar segment
- **33.**: Lock fitting portion
- **40.**: Fastening element
- **50.**: Sleeve housing
- **51.**: Clamp sleeve gaps
- **52.**: Lower clamp holder nails
- **53.**: Upper clamp holder nails
- **P.**: Profile
- **S.**: Sprinkler sleeve

### Detailed Description of an Embodiment of the Invention

### Structure Principle;

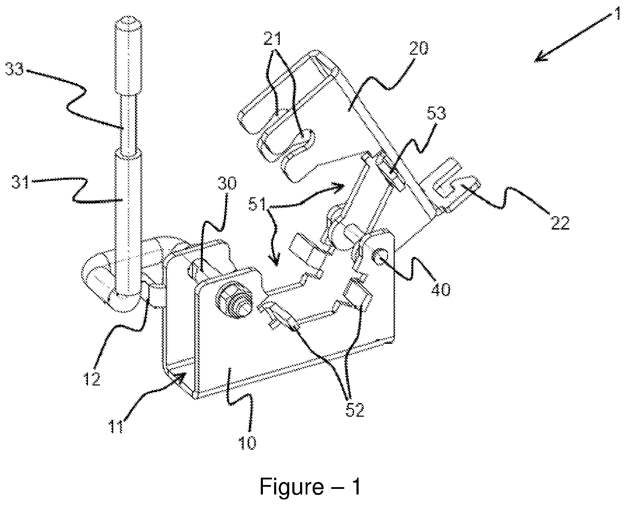

The sprinkler bracket (1) consists of two main parts namely the lower clamp (10) and the upper clamp (20). The lower clamp (10) is a clamp group which enables the profile (P) and the sprinkler sleeve (S) to be fixed and remain together. The upper clamp (20) is the clamp group which is closed on the lower clamp (10) and locks the sprinkler sleeve (S) inside. Figure 1 is a perspective view of the lower clamp (10) and the upper clamp (20) in which they are coupled with each other and are in an open manner.

In the inner portion of the lower clamp (10), there is a profile housing (11) where the sprinkler profile (P) will pass through.

After the assembly of the lower clamp (10) and the upper clamp (20) to each other, a sleeve housing (50) is formed in the middle portion. The sleeve housing (50) is formed such that the clamp sleeve gaps (51) come face to face with each other which are formed inwardly in the middle portions of the lower clamp (10) and the upper clamp (20).

In order to firmly fix the sprinkler sleeve (S) into the sleeve housing (50) formed between the lower clamp (10) and the upper clamp (20), there are lower clamp holder nails (52) which are in the clamp sleeve gaps (51) of the lower clamp (10), have a concave structure facing outwards and are formed on both sides. The sprinkler sleeve (S) is compressed into the sleeve housing (50) by the lower clamp nails (52) and the upper clamp nails (53). With the same aim, the upper clamp holder nails (53) are formed on the upper clamp (20).

The connection of the lower clamp (10) and the upper clamp (20) with each other is performed by two elements from two different points. These elements are the locking bar (30) and the fastening element (40). The fastening element (40) fixes two parts to each other and rotating process is performed by taking this point as the center.

During the upper clamp (20) is fitted on the lower clamp (10), a locking bar housing (21) is formed on the end portion of the upper clamp (20) such that it fits in the locking bar (30).

The locking bar (30) is the element which enables the upper clamp (20) to be fixed after it is closed on the lower clamp (10). The handle (31) is formed by sloping the extension of the locking bar (30) outside the lower clamp (10). The handle (31) is the portion which helps rotating the locking bar (30) around its axis by 90 degrees in order to perform the locking process. Where the locking bar (30) is fixed to the lower clamp (10), a bar segment (32) is used.

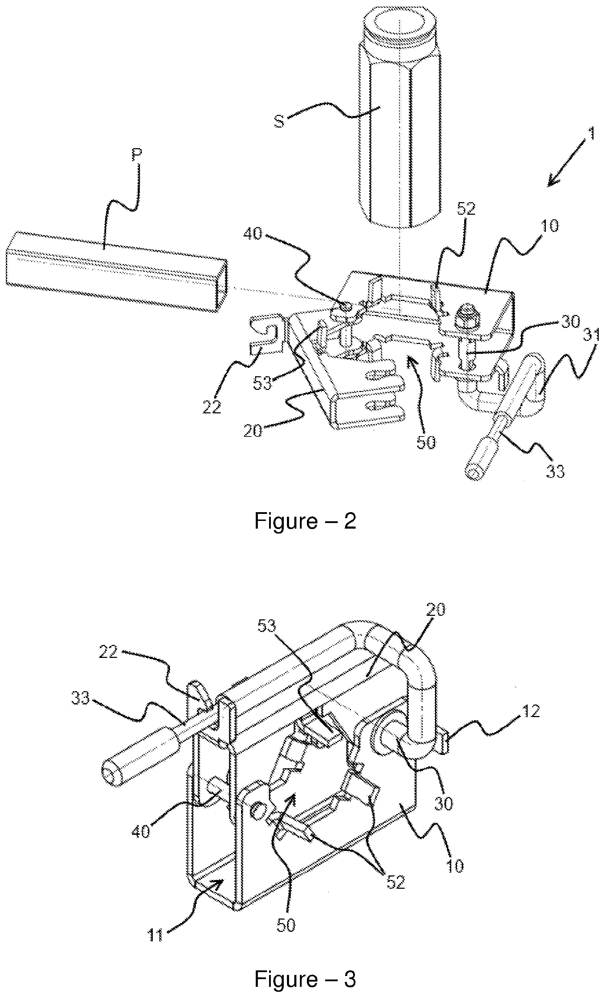

The handle (31) is seen in detail in the figures. The structure of the handle (31) is such that after locking, it can lie down on the upper clamp (20). The position that it takes on the structure after locking is seen in Figure 3. The end portion of the handle (31) has a thinner structure compared to the other portions. This portion is the lock fitting portion (33), is the portion which is fitted into the handle lock (22) formed on the end portion on the side of fastening element (40) and on the upper clamp (20). Lock fitting portion (33) is seen more clearly in the figures.

Also, in all figures, the handle lock (22) formed on the upper clamp (20) is seen. The structure of the handle lock (22) has nails and is designed to prevent the unintentional protrusion of the lock fitting portion (33) which will be placed therein.

### Assembly and Operation Principle;

First, the profile (P) to be formed on the ceiling where the sprinkler hose will be attached, is fitted into the profile housing (11) located on the lower clamp (10). Subsequently, the lower clamp (10) and the upper clamp (20) are fixed to each other by the fastening element (40). A durable connection is performed by compressing the profile (P) with the lower clamp (10) via fixing. This fixation point allows for rotating the upper clamp (20) while this fixation points serves as a hinge.

The sprinkler sleeve (S) located on the end portion of the sprinkler hose is located in the sleeve housing (50) of the sprinkler bracket (1) which is in the position in Figure 2 in a perpendicular manner. After positioning, the upper clamp (20) rotates the fastening element (40) by taking the sleeve and is closed on the lower clamp (10). The sprinkler sleeve (S) when it is closed is compressed into the sleeve housing (50) by the lower clamp nails (52) and the upper clamp nails (53) which are clearly seen in Figures 1 and 3.

During the closing process, the locking bar housing (21) formed on the upper clamp (20) fits into the locking bar (30) and the connection takes place. The handle (31) which is the external portion of the locking bar (30) is perpendicular to the profile (P) by means of abutting to the handle border abutment (12). When the handle (31) is perpendicular to the profile (P), complete locking is not performed. The handle (31) is rotated in a parallel manner to the profile (P). Together with this rotation the handle (31) becomes parallel to the upper clamp (20) and the lock fitting section (33) formed on the handle (31) is fitted into the handle lock (22). Full locking of the handle (31) is realized by means of this fitting.

When the system is required to be disassembled, the handle (31) is rotated by 90 degrees after it is released from the handle lock (22) and is brought perpendicular to the profile (P) by abutting on the border abutment (12) and the lock is opened. Subsequently, the upper clamp (20) is pulled upwardly in a manual manner and the locking bar housing (21) is released from the locking bar (30). The sprinkler sleeve (S) is removed from the sleeve housing (50) with this process.

## Claims

1. A sprinkler bracket (1) used in a sprinkler system which detects the fire in indoor and outdoor areas and is used for fire extinguishing by spraying water; comprises in following;
• a lower clamp (10) through which the profile (P) where the sprinkler system will be mounted is passed;
• an upper clamp (20) which corresponds to the lower clamp (10) and allows for locking the sprinkler sleeve (S) by means of connecting with the lower clamp (10);
• A sleeve housing (50) in which the sprinkler sleeve (S) is placed for locking;
**characterized by comprising;**
• a locking bar (30) which is attached on the lower clamp (10), allows for locking after the lower clamp (10) and the upper clamp (20) fit on each other;
• a handle (31) which provides rotation of the locking bar (30) around own axis,
• a handle lock (22) which allows for keeping the handle (31) on the upper clamp (20) after the handle's (31) rotation for locking and is formed on the upper clamp (20).

2. A sprinkler bracket (1) according to claim 1, **characterized by comprising;** a handle border abutment (12) which is formed on the side of locking bar (30) of the lower clamp (10) and limits the rotation of the handle (31) in all direction.

3. A sprinkler bracket (1) according to claim 1, **characterized by comprising;** a lock fitting portion (33) which is formed on the end portion of the handle (31) in a manner that corresponds to the handle lock (22) and is formed for placing into the handle lock (22) of the handle (31) easily.

4. A sprinkler bracket (1) according to claim 1, **characterized by comprising;** lower clamp holder nails (52) which are formed in a concave structure on the remaining side of the lower clamp (10) in the sleeve housing (50) and allows for compressing the sprinkler sleeve (S).

5. A sprinkler bracket (1) according to claim 1, **characterized by comprising;** upper clamp holder nails (53) which are formed in a concave structure on the remaining side of the upper clamp (20) in the sleeve housing (50) and allows for compressing the sprinkler sleeve (S).

## Patentansprüche

1. Sprinklerhalterung (1), die in einem Sprinklersystem verwendet wird, welches das Feuer in Innen- und Außenbereichen erkennt und zum Feuerlöschen durch Sprühen von Wasser verwendet wird; umfasst Folgendes;
• eine untere Klemme (10), durch die das Profil (P), an dem das Sprinklersystem montiert wird, geführt wird;
• eine obere Klemme (20), die der unteren Klemme (10) entspricht und es ermöglicht, die Sprinklerhülse (S) durch Mittel zum Verbinden mit der unteren Klemme (10) zu verschließen;
• ein Hülsengehäuse (50), in dem die Sprinklerhülse (S) zum Verschließen platziert ist;
**dadurch gekennzeichnet, dass dieses Folgendes umfasst;**
• eine Verschließungsstange (30), die an der unteren Klemme (10) angebracht ist, ermöglicht das Verschließen, nachdem die untere Klemme (10) und die obere Klemme (20) aneinander angepasst wurden;
• einen Griff (31), der Drehung der Verschließungsstange (30) um die eigene Achse bereitstellt,
• ein Griffschloss (22), das ein Halten des Griffs (31) an der oberen Klemme (20) nach der Drehung des Griffs (31) zum Verschließen ermöglicht und an der oberen Klemme (20) gebildet ist.

2. Sprinklerhalterung (1) nach Anspruch 1, **dadurch gekennzeichnet, dass diese Folgendes umfasst;** einen Griffrandanschlag (12), der auf der Seite von Verschließungsstange (30) der unteren Klemme (10) gebildet ist und die Drehung des Griffs (31) in alle Richtungen begrenzt.

3. Sprinklerhalterung (1) nach Anspruch 1, **dadurch gekennzeichnet, dass diese Folgendes umfasst;** einen Schlossanpassungsabschnitt (33), der auf eine Weise an dem Endabschnitt des Griffs (31) gebildet ist, die dem Griffschloss (22) entspricht, und zum einfachen Platzieren in dem Griffschloss (22) des Griffs (31) gebildet ist.

4. Sprinklerhalterung (1) nach Anspruch 1, **dadurch gekennzeichnet, dass diese Folgendes umfasst;** untere Klemmenhalternägel (52), die in einer konkaven Struktur auf der verbleibenden Seite der unteren Klemme (10) in dem Hülsengehäuse (50) gebildet sind und ein Zusammendrücken der Sprinklerhülse (S) ermöglichen.

5. Sprinklerhalterung (1) nach Anspruch 1, **dadurch gekennzeichnet, dass diese Folgendes umfasst;** obere Klemmenhalternägel (53), die in einer konkaven Struktur auf der verbleibenden Seite der oberen Klemme (20) in dem Hülsengehäuse (50) gebildet sind und ein Zusammendrücken der Sprinklerhülse (S) ermöglichen.

## Revendications

1. Support d'arroseur (1) utilisé dans un système d'arroseur qui détecte l'incendie dans des espaces intérieurs et
extérieurs et est utilisé pour l'extinction d'incendie par pulvérisation d'eau ; comprend les suivants ;
• un pince inférieure (10) à travers laquelle le profilé (P) sur lequel le système d'arroseur sera monté est passé ;
• une pince supérieure (20) qui correspond à la pince inférieure (10) et permet de verrouiller le manchon d'arroseur (S) au moyen d'un raccordement avec la pince inférieure (10) ;
• Un boîtier (50) de manchon dans lequel le manchon d'arroseur (S) est placé pour le verrouillage ;
**caractérisé en comprenant ;**
• une barre de verrouillage (30) qui est fixée sur la pince inférieure (10), permet le verrouillage après que la pince inférieure (10) et la pince supérieure (20) s'ajustent l'une sur l'autre ;
• une poignée (31) qui assure la rotation de la barre de verrouillage (30) autour de son propre axe,
• un verrou (22) de poignée qui permet de maintenir la poignée (31) sur la pince supérieure (20) après la rotation de la poignée (31) pour le verrouillage et qui est formé sur la pince supérieure (20).

2. Support d'arroseur (1) selon la revendication 1, **caractérisé en comprenant** ; une butée de bordure (12) de poignée qui est formée sur le côté de la barre de verrouillage (30) de la pince inférieure (10) et limite la rotation de la poignée (31) dans toutes les directions.

3. Support d'arroseur (1) selon la revendication 1, **caractérisé en comprenant** ; une partie d'ajustement (33) de verrou qui est formée sur la partie d'extrémité de la poignée (31) d'une manière qui correspond au verrou (22) de poignée et est formée pour être placée facilement dans le verrou (22) de poignée de la poignée (31).

4. Support d' arroseur (1) selon la revendication 1, **caractérisé en comprenant** ; des clous de soutien (52) de pince inférieure qui sont formés dans une structure concave sur le côté restant de la pince inférieure (10) dans le boîtier de manchon (50) et permettent de comprimer le manchon d'arroseur (S).

5. Support d'arroseur (1) selon la revendication 1, **caractérisé en comprenant** ; des clous de soutien (53) de pince supérieure qui sont formés dans une structure concave sur le côté restant de la pince supérieure (20) dans le boîtier de manchon (50) et permettent de comprimer le manchon d'arroseur (S).
